# EUROPÄISCHE PATENTSCHRIFT

(11) **EP 1 090 878 B1**
(45) Veröffentlichungstag und Bekanntmachung des Hinweises auf die Patenterteilung: **16.04.2003**
(21) Anmeldenummer: 00117407.7
(22) Anmeldetag: 11.08.2000
(51) Int. Cl.: C01B 3/38

(54) **Dampfreformierungsanlage**
Steam reforming unit
Installation de réformage à la vapeur

(30) Priorität: 06.10.1999 DE 19948221
(43) Veröffentlichungstag der Anmeldung: 11.04.2001
(73) Patentinhaber: Ballard Power Systems AG, 73230 Kirchheim / Teck-Nabern (DE)
(72) Erfinder: Boneberg, Stefan, 72660 Beuren (DE); Brauchle, Stefan, 88400 Biberach/Riss (DE); Motzet, Bruno, 73235 Weilheim/Teck (DE); Wolfsteiner, Matthias, 73230 Kirchheim (DE)
(74) Vertreter: Beyer, Andreas, Dr.

(56) Entgegenhaltungen:
- EP-A- 0 861 802
- DE-A- 19 746 251
- DE-A- 19 754 012
- PATENT ABSTRACTS OF JAPAN vol. 1995, no. 08, 29. September 1995 (1995-09-29) & JP 07 126001 A (AQUEOUS RES:KK), 16. Mai 1995 (1995-05-16)

## Beschreibung

Die Erfindung bezieht sich auf eine Anlage zur Dampfreformierung eines Kohlenwasserstoff- oder Kohlenwasserstoffderivat-Einsatzstoffs mit einem Verdampfer, der ein umzusetzendes Einsatzstoffdampfgemisch bereitet, einem Reformer, in dem das bereitete Einsatzstoffdampfgemisch durch eine meist endotherme Reformierungsreaktion umgesetzt wird, und Brennermitteln zur Beheizung des Verdampfers und des Reformers.

Anlagen dieser Art werden beispielsweise im mobilen Einsatz in brennstoffzellenbetriebenen Kraftfahrzeugen zur Wasserdampfreformierung von flüssig mitgeführtem Methanol verwendet, um dadurch Wasserstoff als Brennstoff für die Brennstoffzellen bereitzustellen, ohne einen größeren Wasserstoffspeicher zu benötigen. Für diesen Anwendungsfall ist eine kompakte Anlagenbauform gewünscht, die sich mit relativ geringem Gewicht und möglichst geringem Aufwand realisieren läßt. Gerade auch für derartige Kraftfahrzeuganwendungen ist außerdem eine möglichst niedrige Wärmekapazität der Anlage wünschenswert, damit die Anlage bei einem Kaltstart möglichst rasch ihre Betriebstemperatur erreicht. Zudem besteht speziell auch für Fahrzeuge Bedarf an Dampfreformierungsanlagen mit unterschiedlichem Leistungsvermögen entsprechend den unterschiedlichen Fahrzeugantriebsleistungen. Zudem ist eine geringe Wärmekapazität der Anlage wünschenswert, um sie beim Kaltstart möglichst rasch auf Betriebstemperatur bringen zu können.

In der Offenlegungsschrift JP 07-126001 (A) ist eine gattungsgemäße Dampfreformierungsanlage vom Plattenstapeltyp beschrieben, die integriert einen Verdampfer, einen Reformer und einen CO-Oxidator enthält, wobei diese drei Anlagenkomponenten in einer ersten Gruppe übernächster Plattenschichten seriell in einer Stapelquerrichtung, d.h. einer zu den Schichtebenen parallelen Richtung, hintereinan-derliegend angeordnet sind. Dem Aufbau ist ein Brenner zugeordnet, in welchem ein zugeführtes Gemisch unter Entflammung verbrannt wird. Die heißen Verbrennungsabgase werden im Gleichstrom zum durch den Verdampfer, den Reformer und den CO-Oxidator strömenden Einsatzstoffstrom durch eine zweite Gruppe übernächster Plattenschichten des Plattenstapels hindurchgeleitet, die sich mit denjenigen der ersten Gruppe abwechseln, und heizen dadurch den Verdampfer, den Reformer und den CO-Oxidator auf.

In der Offenlegungsschrift DE 197 54 012 A1 ist eine Anlage der eingangs genannten Art beschrieben, die zusätzlich zum Verdampfer, einem Hauptreformer und einer katalytischen Brennereinheit eine Vorreformierungseinheit und eine CO-Entfernungseinheit in einer integrierten, schicht-förmig aufgebauten Reaktorbaueinheit vom Plattenstapel- und/oder Rohrbündeltyp enthält. Dabei stehen zum einen der Verdampfer und der Hauptreformer mit je einem von zwei parallelen Teilen der katalytischen Brennereinheit und zum anderen die Vorreformierungseinheit mit der CO-Entfernungseinheit in Wärmekontakt. Die dortige Moduleinheit besteht speziell aus einem ersten Modulteil mit aneinandergrenzenden Schichten des Verdampfers und der katalytischen Brennereinheit, einem zweiten Modulteil mit aneinandergrenzenden Schichten von Vorreformierungseinheit und CO-Entfernungseinheit sowie einem dritten Modulteil mit aneinandergrenzenden Schichten des Reformers und der katalytischen Brennereinheit.

In einer weiteren Dampfreformierungsanlage, wie sie in der Offenlegungsschrift DE 197 46 251 A1 beschrieben ist, sind ein Reformer und eine kombinierte Oxidator/Brenner-Einheit, die als CO-Oxidator und dabei gleichzeitig als katalytischer Brenner fungiert, in eine schichtförmig aufgebaute Moduleinheit vom Plattenstapeltyp und/oder vom Rohrbündeltyp integriert. An diese Moduleinheit kann eine weitere Moduleinheit angrenzen, die einen dem Reformer strömungstechnisch vorgeschalteten Verdampfer und einen mit dem Verdampfer in Wärmekontakt stehenden katalytischen Brenner umfaßt, der strömungstechnisch von der Oxidator/Brenner-Einheit getrennt gehalten ist.

In der Offenlegungsschrift EP 0 861 802 A2 ist neben anderweitigen Realisierungen eine Wasserdampfreformierungsanlage gezeigt, bei der die Komponenten für die Verdampfung von Wasser und Methanol sowie für die Reformierung in einem einzigen, schichtstapelförmig aufgebauten Modul enthalten sind, in welchem jede zweite Schicht eine Heizschicht bildet, durch die ein aufgeheiztes Wärmeträgerfluid hindurchgeleitet wird. Die andere Gruppe übernächster Schichten besteht aus einer Schichtfolge einer Methanolverdampfungsschicht, einer Wasserverdampfungsschicht, einer Dampfüberhitzungsschicht und einer Reformierungsschicht. Eine andere dort gezeigte Wasserdampfreformierungsanlage beinhaltet ein Modul mit schichtstapelförmigem Aufbau, in welchem in der Reihenfolge von einer Hochtemperaturseite zu einer Niedertemperaturseite eine katalytische Brennerschicht, eine Reformierungsschicht, eine Dampfüberhitzungsschicht, eine Wärmegewinnungsschicht, eine CO-Shiftreaktionsschicht, eine Verdampfungsschicht, eine CO-Oxidationsschicht und eine Schicht zur Vorerwärmung eines flüssigen Methanol/-Wasser-Gemischs vorgesehen sind.

Der Erfindung liegt als technisches Problem die Bereitstellung einer Dampfreformierungsanlage der eingangs genannten Art zugrunde, die relativ kompakt, mit geringer Wärmekapazität und niedrigen Wärmeverlusten und mit verhältnismäßig geringem Aufwand realisierbar ist und eine flexible Anpassung an unterschiedliche geforderte Reformierungsumsatzleistungen ermöglicht.

Die Erfindung löst dieses Problem durch die Bereitstellung einer Dampfreformierungsanlage mit den Merkmalen des Anspruchs 1 oder 4.

Durch die Verwendung einer derartigen Anlage mit einer oder mehreren schichtförmig aufgebauten Moduleinheiten läßt sich die Dampfreformierungsanlage vergleichsweise kompakt, mit geringem Gewicht sowie niedriger Wärmekapazität und niedrigen Wärmeverlusten realisieren. Durch die kompakte Bauform und die Vereinfachung einer zugehörigen Verbindungs- und Anschlußstruktur können zudem Fertigungsaufwand und Gewicht eingespart werden. Die niedrige Wärmekapazität ergibt ein gutes Kaltstartverhalten der Anlage. Ein weiterer Vorteil besteht im flexiblen Aufbau der Anlage durch Verwendung einer beliebigen, gewünschten Anzahl von Moduleinheiten je nach gefordertem Anlagenleistungs-vermögen.

Speziell umfaßt die Anlage gemäß Anspruch 1 mehrere gleiche, schichtförmig aufgebaute Moduleinheiten, die jeweils aus Schichten des Verdampfers, des Reformers und der katalytischen Brennermittel aufgebaut sind, wobei die jeweils aneinandergrenzenden Schichten miteinander in Wärmekontakt stehen. Zwischen je zwei Verdampfer- und/oder Refor-merschichten, d.h. zwischen zwei Verdampferschichten, zwischen zwei Reformerschichten und zwischen einer Verdampfer- und einer Reformerschicht, ist jeweils eine katalytische Brennerschicht angeordnet, wobei die katalytischen Brennerschichten jeder derartigen Moduleinheit miteinander seriell oder parallel in Fluid-verbindung stehen. Die Einlässe für die Verdampferschichten und/oder für die katalytischen Brennerschichten der mehreren Moduleinheiten sind jeweils strömungstechnisch parallelgeschaltet, d.h. die Verdampferteile bzw. die katalytischen Brennerteile der aneinandergekoppelten Moduleinheiten werden parallel mit ihren zugehörigen Stoffströ-men, wie dem zu verdampfenden Einsatzstoffgemisch bzw. dem katalytisch zu verbrennenden Brenngasgemisch, versorgt.

Bei einer nach Anspruch 2 weitergebildeten Anlage ist eine Moduleinheit vorgesehen, die eine oder mehrere erste katalytische Brennerschichten zur Verdampferbeheizung sowie eine oder mehrere zweite katalytische Brennerschichten zur Reformerbeheizung dergestalt aufweist, daß die reformerseitige katalytischen Brennerschichtgruppe der verdampferseitigen katalytischen Brennerschicht-gruppe seriell nachgeschaltet ist. In weiterer Ausgestaltung dieser Maßnahme ist gemäß Anspruch 3 ein zusätzlicher Edukteinlaß zwischen der Ausgangsseite der ersten katalytischen Brennerschichtgruppe und der Eingangsseite der zweiten katalytischen Brennerschichtgruppe vorgesehen. Über diesen kann zusätzlich Brennstoff und/oder Sauerstoff für die zweite katalytische Brennerschichtgruppe zugegeben werden.

Die Anlage gemäß Anspruch 4 beinhaltet speziell eine oder mehrere Verdampfer/Reformer-Kombinationsschichten, in denen jeweils ein eintrittsseitiger Teil einen Verdampferteil und ein austrittsseitiger Teil einen Reformerteil bilden. Alternierend zu diesen Verdampfer/Reformer-Kombinationsschichten sind in der schichtförmig aufgebauten Moduleinheit Brennermittelschichten vorgesehen. Diese sind im an den Verdampfer angrenzenden Teil in anderer Materialdichte oder mit einem Material mit anderer katalytischen Aktivität als im an den Reformer angrenzenden Teil oder nur in einem dieser beiden Teile mit einem zugehöri-gen Katalysatormaterial belegt. Dadurch kann die im zugeführten Brenngasgemisch enthaltene Heizenergie in gewünschter Weise auf den Verdampfer und den Reformer aufgeteilt werden.

Bei einer nach Anspruch 5 weitergebildeten Anlage weist wenigstens eine der verwendeten Moduleinheiten mehrere parallel durchströmbare Verdampferschichten und/oder mehrere parallel durchströmbare Reformerschichten auf. Diese werden jeweils von den zwischenliegenden katalytischen Brennerschichten beheizt.

In einer nach Anspruch 6 weitergebildeten Anlage weist wenigstens eine Moduleinheit mehrere parallel durchströmbare katalytische Brennerschichten auf. Durch die parallele Durchströmung ergeben sich bei sonst gleichem Aufbau der katalytischen Brennerschichten ohne weitere Maßnahmen im wesentlichen gleiche Heizleistungen derselben innerhalb der Moduleinheit.

Vorteilhafte Ausführungsformen der Erfindung sind in den Zeichnungen dargestellt und werden nachfolgend beschrieben. Hierbei zeigen:
- Fig. 1: ein schematisches Blockdiagramm eines Brennstoffzellensystems mit anodenseitig vorgeschalteter Wasserdampfreformierungsanlage mit einem Verdampfen Reformer/Brenner-Modul,
- Fig. 2: eine schematische Seitenansicht eines ersten Ausführungsbeispiels für das Verdampfer/Reformer/Brenner-Modul von Fig. 1,
- Fig. 3: eine schematische ausschnittweise Seitenansicht eines zweiten Ausführungsbeispiels für das Verdampfer/Reformer/Brenner-Modul von Fig. 1 und
- Fig. 4: eine schematische ausschnittweise Seitenansicht eines dritten Ausführungsbeispiels für das Verdampfer/Reformer/Brenner-Modul von Fig. 1.

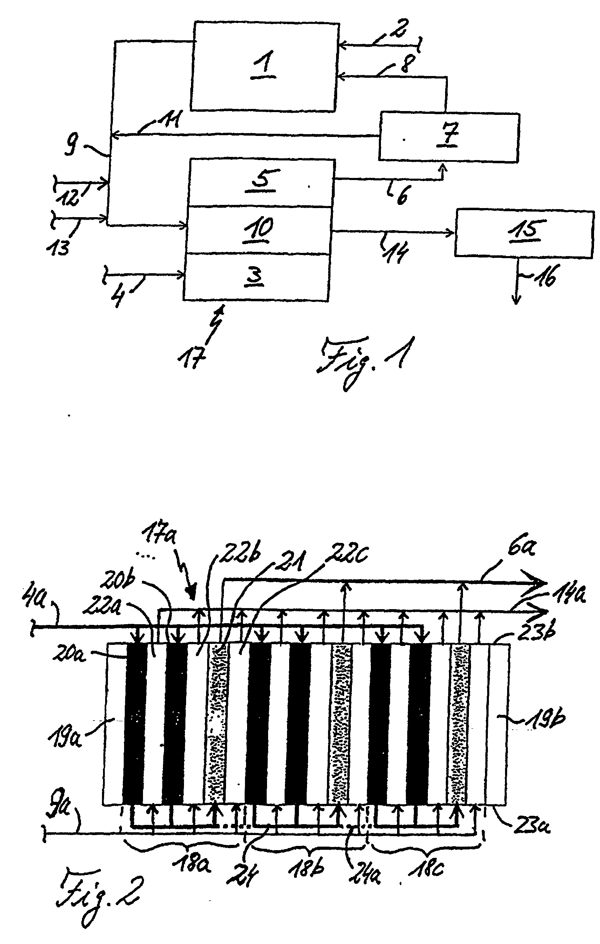

Fig. 1 zeigt ein Brennstoffzellensystem, wie es insbesondere in einem brennstoffzellenbetriebenen Kraftfahrzeug vorgesehen sein kann. Das System beinhaltet einen Brennstoffzellenteil 1 mit einem oder mehreren Brennstoffzellen, dem kathodenseitig über eine Kathodenzuleitung 2 Luft oder ein anderes sauerstoffhaltiges Gas zugeführt wird und dem anodenseitig eine Wasserdampfreformierungsanlage vorgeschaltet ist.

Diese Dampfreformierungsanlage beinhaltet einen Verdampfer 3, dem über eine Einlaßleitung 4 ein zu verdampfendes Einsatzstoffgemisch zugeführt wird, das einen zwecks Wasserstoffgewinnung unzusetzenden Kohlenwasserstoff- oder Kohlenwasserstoffderivat-Einsatzstoff enthält, z.B. Methanol. Der im Verdampfer 3 bereitete Einsatzstoffgemischdampf wird in einer in Fig. 1 nicht gezeigten Weise einem Reformer 5 zugeführt, der es einer meist endotherm ablaufenden Reformierungsreaktion unterzieht, durch die der Kohlenwasserstoff- bzw. Kohlenwasserstoffderivat-Einsatzstoff, wie Methanol, mit Wasser in ein wasserstoffreiches Reformat umgesetzt wird. Das Reformat verläßt den Reformer über eine Auslaßleitung 6 und wird einer Gasreinigungseinheit 7 zugeführt, in der es von für das Brennstoffzellensystem 1 schädlichem Kohlenmonoxid gereinigt wird. Dazu kann die Gasreinigungseinheit ein- oder mehrstufig ausgelegt sein und z.B. eine CO-Oxidationsstufe und/oder eine CO-Shiftstufe und/oder eine selektive Wasserstoffabtrennstufe umfassen. Das solchermaßen gereinigte Reformat wird dann über eine Anodeneinlaßleitung 8 als im wesentlichen aus Wasserstoff bestehendes Brenngas in die Anodenseite des Brennstoffzellensystems 1 eingespeist.

Das aus dem Brennstoffzellensystem 1 anoden- und/oder kathodenseitig austretende Abgas wird über eine Brennstoffleitung 9 einer katalytischen Brennereinheit 10 zugeführt, wobei neben dem Brennstoffzellenabgas auch das Retentat der Gasreinigungseinheit 7 über eine in die Brennstoffleitung 9 mündende Retentatleitung 11 der katalytischen Brennereinheit 10 zugeführt wird. Über eine weitere in die Brennstoffleitung 9 mündende Einspeiseleitung 12 erfolgt eine Zufuhr von Brennstoff, z.B. von Methanol, während je nach Bedarf über eine weitere Einspeiseleitung 13 Luft oder ein anderes sauerstoffhaltiges Gas zugeführt werden kann. Über die beiden zusätzlichen Einspeiseleitungen 12, 13 können insbesondere auch während Kaltstartphasen ausreichende Mengen an Brennstoff und Sauerstoff zur katalytischen Verbrennung zugeführt werden, während der sie systemintern, d.h. vom Brennstoffzellensystem 1 und der Gasreinigungseinheit 7, noch nicht in ausreichendem Maß bereitgestellt werden können. Die katalytische Brennereinheit 10 dient zur Beheizung sowohl des Verdampfers 3 als auch des Reformers 5, wozu die erforderliche Wärme durch eine katalytische Verbrennung des eingesetzten Brennstoffs gewonnen wird. Das entstehende Verbrennungsabgas wird über eine Brennerauslaßleitung 14 einer Abgasreinigungseinheit 15 zugeführt, um dort gereinigt und über eine Abgasauslaßleitung 16 als gereinigtes Abgas abgeführt zu werden.

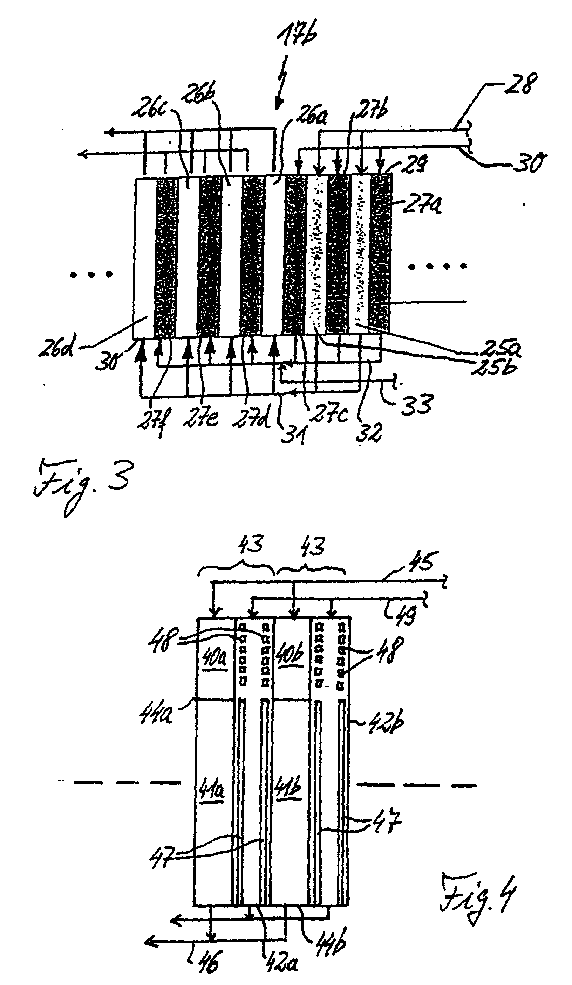

Charakteristischerweise bilden beim ansonsten herkömmlichen Systemaufbau von Fig. 1 der Verdampfer 3, der Reformer 5 und die katalytische Brennereinheit 10 eine gemeinsame, integrierte Baueinheit in Form eines kombinierten Verdampfer/Reformer/Brenner-Moduls 17 mit schichtförmigem Aufbau, z.B. vom Plattenstapeltyp mit aufeinandergestapelten bzw. aneinandergereihten Plattenschichten oder vom Rohrbündeltyp mit koaxial aufeinanderfolgenden Zylinderringschichten. Das Modul 17 besteht aus einer oder mehreren, ihrerseits schichtförmig aufgebauten Moduleinheiten, von denen jede aus mit Wärmekontakt aneinandergrenzenden Schichten des Verdampfer 3, des Reformers 5 und der katalytischen Brennereinheit 10 besteht. Zwischen je zwei Verdampferschichten und/oder zwei Reformerschichten und/oder zwischen je einer Verdampfer- und einer Reformerschicht ist jeweils eine katalytische Brennerschicht angeordnet. Die meist mehreren katalytischen Brennerschichten, aus denen die katalytische Brennereinheit 10 besteht, stehen seriell oder parallel miteinander in Fluidverbindung. Zwei mögliche Ausführungsbeispiele für dieses Verdampfer/Reformer/Brenner-Modul 17 sind in Plattenstapelbauweise in den Fig. 2 und 3 gezeigt.

Das in Fig. 2 gezeigte Verdampfer/Reformer/Brenner-Modul 17a besteht aus drei Moduleinheiten 18a, 18b, 18c mit einem identischen Plattenstapelaufbau, auch Schichtstapelaufbau bezeichnet, die längs ihrer Stapelrichtung zu einem das gesamte Modul 17a bildenden Stapel aneinandergefügt sind. Stapelendseitig ist das Modul 17a durch je eine Deckplatte 19a, 19b abgeschlossen.

Jede Moduleinheit 18a, 18b, 18c des Beispiels von Fig. 2 besteht aus zwei Verdampferschichten 20a, 20b, (schwarz gezeichnet), einer Reformerschicht 21 (grau gezeichnet) und drei katalytischen Brennerschichten 22a, 22b (hell gezeichnet) in der Schichtfolge: erste Verdampferschicht 20a, erste katalytische Brennerschicht 22a, zweite Verdampferschicht 20b, zweite katalytische Brennerschicht 22b, Reformerschicht 21 und dritte katalytische Brennerschicht 22c.

Somit bilden die Verdampfer- und die Reformerschichten 20a, 20b, 21 einerseits sowie die katalytischen Brennerschichten 22a, 22b, 22c andererseits zwei Gruppen von alternierend in Stapelrichtung aufeinanderfolgenden Schichten derart, daß jede Verdampfer- und Reformerschicht 20a, 20b, 21 beidseitig bzw. im Fall der endseitigen Verdampferschicht 20a der in Fig. 2 linken Moduleinheit 18a einseitig mit einer katalytischen Brennerschicht 22a, 22b, 22c in Wärmekontakt steht. Durch katalytische Verbrennung eines zugeführten Brennstoffs wird in den katalytischen Brennerschichten 22a, 22b, 22c die benötigte Prozeßwärme erzeugt, um damit die Verdampferschichten 20a, 20b und die Reformerschichten 21 in jeweils gewünschtem Maß ausreichend zu beheizen. Die Raumaufteilung im Stapel, d.h. die Größe und Anzahl der Verdampfer-, Reformer- und Brennerschichten 20a bis 22c wird dabei entsprechend dem Energiebedarf des jeweiligen Anwendungsfalls gewählt. Im Beispiel von Fig 2 beträgt beispielsweise der Heizenergiebedarf für den aus den Verdampferschichten 20a, 20b gebildeten Verdampfer das Doppelte des durch die Reformerschichten 21 gebildeten Reformers, weshalb doppelt so viele Verdampferschichten 20a, 20b wie Reformerschichten 21 vorgesehen sind.

Durch eine in Fig. 2 ebenfalls schematisch dargestellte Anschlußstruktur wird eine gleichmäßige Zu- und Abführung der verschiedenen Stoffströme zu und von den einzelnen Schichten 20a bis 22c bewirkt. Speziell wird über eine gemeinsame Brennstoffleitung 9a ein geeignetes Brennstoffgemisch den einzelnen katalytischen Brennerschichten 22a, 22b, 22c aller Moduleinheiten 18a, 18b, 18c, die entsprechende Heizräume bilden, parallel an einer ersten Stapelseite 23a zugeführt, und das erzeugte Verbrennungsabgas wird an der gegenüberliegenden, zweiten Stapelseite 23b über eine Abgasleitung 14a parallel aus den einzelnen katalytischen Brennerschichten 22a, 22b, 22c abgeführt. Das zu verdampfende Einsatzstoffgemisch wird über eine gemeinsame Verdampfereinlaßleitung 4a den Verdampferschichten 20a 20b aller Moduleinheiten 18a, 18b, 18c parallel an der zweiten Stapelseite 23b zugeführt. Dadurch wird das Einsatzstoffgemisch in den von den Verdampferschichten 20a, 20b gebildeten parallelen Verdampferräumen im Gegenstrom zum Brennstoffstrom in den katalytischen Brennerschichten 22a, 22b, 22c geführt, wodurch sich eine besonders wirksame Wärmeübertragung erzielen läßt.

An der ersten Stapelseite 23a wird das in den beiden Verdampferschichten 20a, 20b jeder Moduleinheit 18a, 18b, 18c bereitete Einsatzstoffgemisch über eine jeweilige Umlenkeinheit 24 aus den beiden Verdampferschichten 20a, 20b entnommen und in die Reformerschicht 21 derselben Moduleinheit 18a, 18b bzw. 18c eingespeist, wo in den hierdurch gebildeten Reaktionsräumen die katalytische Reformierungsreaktion stattfindet. Als Variante kann statt der direkten Umlenkung des verdampften Einsatzstoffgemischs dessen Einleitung in einen den Moduleinheiten 18a, 18b, 18c gemeinsamen Sammelkanal 24a, wie in Fig. 2 gestrichelt angedeutet, vorgesehen sein, von wo es dann in die Reformerschichten 21 gelangt. Das in den Reformerschichten 21 erzeugte Reformat wird an der ersten Stapelseite 23b entnommen und verläßt das Modul 17a über eine entsprechende Reformatsammelleitung 6a, über die es dann beispielsweise einer Gasreinigungseinheit zugeführt wird.

Es versteht sich, daß statt des in Fig. 2 gezeigten Beispiels dreier aneinandergekoppelter Moduleinheiten das Verdampfer/Reformer/Brenner-Modul durch eine beliebige andere Anzahl aneinandergekoppelter Moduleinheiten aufgebaut sein kann, die zudem eine andere Verteilung der Verdampfer-, Reformer- und katalytischen Brennerschichten beinhalten können und außerdem nicht sämtlich identisch sein brauchen. Weiter versteht sich, daß durch Vertauschung der Funktionen der Brennstoffleitung 9a und der Abgasleitung 14a statt der gezeigten alternativ die entgegengesetzte Strömungsführung für das Brennstoffgemisch in den katalytischen Brennerschichten 22a, 22b, 22c möglich ist.

Fig. 3 zeigt ein weiteres Verdampfer/Reformer/Brenner-Modul für den Einsatz in der Reformierungsanlage von Fig. 1. Dieses Modul besteht wiederum aus einer beliebigen, gewünschten Anzahl von aneinandergekoppelten Moduleinheiten 17b, wie in Fig. 3 gepunktet angedeutet, von denen eine in Fig. 3 wiedergegeben ist. Diese Moduleinheit 17b ist ebenfalls vom Schichtstapeltyp mit einer ersten Gruppe von Verdampfer- und Reformerschichten und einer zweiten Gruppe von dazu abwechselnd angeordneten katalytischen Brennerschichten. Speziell sind zwei Verdampferschichten 25a, 25b und vier Reformerschichten 26a bis 26d sowie dementsprechend sechs katalytische Brennerschichten 27a bis 27f vorgesehen. Auch in diesem Ausführungsbeispiel kann alternativ zur gezeigten Schichtfolge eine beliebige andersartige Aufeinanderfolge von Verdampfer- und Reformerschichten sowie damit in Wärmekontakt stehenden, unter sich in Fluidverbindung stehenden katalytischen Brennerschichten vorgesehen sein, wobei das Verhältnis der Anzahl von die Reformerräume bildenden Reformerschichten zur Anzahl von die Verdampferräume bildenden Verdampferschichten auf den jeweiligen Anwendungsfall abgestimmt frei gewählt werden kann.

Das zu verdampfende Einsatzstoffgemisch wird den Verdampferschichten 25a, 25b der Moduleinheit 17b über eine Verdampfereinlaßleitung 28 an einer ersten Stapelseite 29 parallel zugeführt. Im Gleichstrom dazu wird den mit den Verdampferschichten 25a, 25b in Wärmekontakt stehenden katalytischen Brennerschichten 27a, 27b, 27c das zu verbrennende Brennstoffgemisch über eine Brennstoffleitung 30 parallel an der ersten Stapelseite 29 zugeführt. Das verdampfte Einsatzstoffgemisch wird an der entgegengesetzten, zweiten Stapelseite 30 mittels einer zugehörigen Umlenkstruktur 31 parallel in die Reformerschichten 26a bis 26d umgelenkt. In analoger Weise stehen die mit den Verdampferschichten 25a, 25b in Wärmekontakt stehenden katalytischen Brennerschichten 27a, 27b, 27c ausgangsseitig über eine zugehörige Umlenkstruktur 32 mit der Eintrittsseite der übrigen, mit den Reformerschichten 26a bis 26d in Wärmekontakt stehenden katalytischen Brennerschichten 27d, 27e, 27f in Fluidverbindung. Mit anderen Worten wird der über die Brennstoffleitung 30 zugeführte Brennstoffstrom zunächst durch die drei ersten, mit den beiden Verdampferschichten 25a, 25b in Wärmekontakt stehenden Brennerschichten 27a, 27b, 27c und anschließend durch die drei restlichen katalytischen Brennerschichten 27d, 27e, 27f hindurchgeleitet.

Damit sich trotz dieser Brennstofführung noch eine ausreichende Heizwärmeerzeugung für die seriell nachgeschaltete Gruppe der mit den Reformerschichten 26a bis 26d in Wärmekontakt stehenden katalytischen Brennerschichten 27d, 27e, 27f ergibt, ist bei Bedarf eine Begrenzung der Heizleistung in den vorgeschalteten Brennerschichten 27a, 27b, 27c, die der Verdampferbeheizung dienen, beispielsweise dadurch vorgesehen, daß der diesen zugeführte Brennstoffstrom nur einen unterstöchiometrischen Anteil an Luft oder Brennstoff enthält. Für die nachgeschaltete katalytische Brennerschichtgruppe 27d, 27e, 27f ist dann eine zusätzliche Eduktzudosierleitung 33d vorgesehen, welche in die zugehörige Umlenkstruktur 32 mündet und über die somit eine ergänzende Zudosierung von Luft und/oder Brennstoff in die nachgeschaltete katalytische Brennerschichtgruppe 27d, 27e, 27f möglich ist. Auf diese Weise kann die insgesamt durch die katalytische Brennereinheit mit den sechs Brennerschichten 27a bis 27f erzeugte Wärmeenergie in gewünschter Weise auf die Verdampferbeheizung einerseits und die Reformerbeheizung andererseits aufgeteilt werden.

Bei der in Fig. 3 gezeigten Strömungsführung strömt das Brennstoffgemisch in den katalytischen Brennerschichten 27a bis 27f im Gleichstrom zum Einsatzstoffgemisch durch die Verdampfer- und Reformerschichten 25a, 25b, 26a bis 26d. Alternativ kann eine Strömungsführung im Gegenstrom für den Verdampfer- und/oder den Reformerteil vorgesehen sein. Zur Gegenstromführung speziell im Reformerteil kann eine zusätzliche Schicht in der Moduleinheit 17b vorgesehen sein, über die das vom Verdampfer bereitete Einsatzstoffdampfgemisch vor Einleitung in die Reformerschichten 26a, 26d oder der aus der ersten Brennerschichtgruppe 27a, 27b, 27c austretende Brennstoffstrom vor Einleitung in die übrigen katalytischen Brennerschichten 27d, 27e, 27f zur gegenüberliegenden Stapelseite geführt wird. In analoger Weise läßt sich eine Gegenstromführung für den Verdampferteil dadurch realisieren, daß die Zuführung des durch die erste katalytische Brennerschichtgruppe 27a, 27b, 27c hindurchgeleiteten Brennstoffstroms von der anderen Stapelseite 30 her bewirkt wird.

Fig. 4 zeigt ein drittes Verdampfer/Reformer/Brenner-Modul, das in der Reformierungsanlage von Fig. 1 verwendbar ist. Dieses Modul besteht wiederum aus einer beliebigen, gewünschten Anzahl von aneinandergekoppelten Moduleinheiten 43, wie gestrichelt angedeutet, von denen zwei in Fig. 4 dargestellt sind und die wiederum vom Schichtstapeltyp sind. Die Moduleinheiten 43 beinhalten jeweils eine Verdampfer/Reformer-Kombinationsschicht 44a, 44b und eine angrenzende katalytische Brennerschicht 42a, 42b. Die beiden Schichttypen wechseln sich im Schichtstapel der Moduleinheiten 43 ab.

Jede Verdampfer/Reformer-Kombinationsschicht 44a, 44b ist in einem eintrittsseitigen Teil als Verdampferraum 40a, 40b konzipiert, wozu beispielsweise eine entsprechende Mikrostruktur oder eine andere Verdampferstruktur herkömmlicher Art eingebracht sein kann, während der restliche, austrittsseitige Abschnitt als Reformerraum 41a, 41b konzipiert ist und dementsprechend ein geeignetes Reformerkatalysatormaterial enthält, z.B. in Form einer Pelletschüttung. Die Verdampferräume 40a, 40b der einzelnen Verdampfer/Reformer-Kombinationsschichten 44a, 44b bilden zusammen den Verdampfer, wobei ihnen parallel das zu verdampfende Einsatzstoffgemisch an einer ersten Stapelseite über eine zugehörige Verdampfereinlaßleitung 45 zugeführt wird. Die Reformerräume 41a, 41b der Verdampfer/Reformer-Kombinationsschichten 44a, 44b bilden zusammen den Reformer, in welchem das in den einzelnen Verdampferräumen 40a, 40b verdampfte Einsatzstoffgemisch durch Reformierung umgesetzt wird. Das gebildete Reformat verläßt parallel die Reformerräume 41a, 41b über eine entsprechende Reformerauslaßleitung 46 an einer zweiten, der ersten gegenüberliegenden Stapelseite.

In die jeweilige katalytische Brennerschicht 42a, 42b ist ein geeignetes Verbrennungskatalysatormaterial eingebracht, wobei im gezeigten Beispiel von Fig. 4 dieses Katalysatormaterial in dem an die Reformerräume 41a, 41b angrenzenden katalytischen Brennerschichtabschnitt als durchgehende Katalysatorbeschichtung 47 und im übrigen, d.h. in dem an die Verdampferräume 40a, 40b angrenzenden Abschnitt, als durchbrochene Katalysatorbeschichtung 48 eingebracht ist. Dadurch ist der dem Verdampfer 40a, 40b zugeordnete Teil jeder katalytischen Brennerschicht 42a, 42b schwächer mit dem Verbrennungskatalysator belegt als der mit dem Reformer 41a, 41b in Wärmekontakt stehende, übrige katalytische Brennerschichtteil. Alternativ kann auch ein Katalysatormaterial mit verringerter katalytischer Aktivität verwendet werden. Auf diese Weise wird erreicht, daß das den verdampferseitigen katalytischen Brennerschichtabschnitten parallel an der ersten Stapelseite über eine entsprechende Brenngaszufuhrleitung 49 zugeführte Brenngasgemisch dort nur teilweise umgesetzt, d.h. katalytisch verbrannt wird, und noch genügend restliches Brenngas zur katalytischen Verbrennung im anschließenden, reformerseitigen Teil der jeweiligen katalytischen Brennerschicht 42a, 42b zur Verfügung steht. Dieses Prinzip eignet sich besonders für stationären Anlagenbetrieb, wobei sich die Heizenergie des zugeführten Brenngases in gewünschter Weise je nach Belegungsgrad des verdampferseitigen und des reformerseitigen Teils der katalytischen Brennerschichten 42a, 42b mit dem Verbrennungskatalysatormaterial zwischen dem Verdampfer 40a, 40b und dem Reformer 41a, 41b aufteilen läßt.

Für Anwendungsfälle, bei denen größere Lastspreizungen erlaubt sein sollen, ist eine Kombination aus Heißgasbeheizung und katalytischer Beheizung von Vorteil. In diesem Fall wird z.B. nur der mit dem Reformer 41a, 41b in Wärmekontakt stehende Teil der jeweiligen katalytischen Brennerschicht 42a, 42b mit dem Verbrennungskatalysatormaterial versehen, während der mit dem Verdampfer 40a, 40b in Wärmekontakt stehende, übrige katalytische Brennerschichtteil ohne Katalysatorbelegung bleibt. Der Verdampfer 40a, 40b wird dann allein durch die Wärme des durch den verdampferseitigen Teil der katalytischen Brennerschichten 42a, 42b hindurchgeführten Heißgases, d.h. des heißen Brenngases, beheizt. Der Reformer 41a, 41b wird hingegen durch die katalytische Verbrennung des Brenngases am eingebrachten Verbrennungskatalysatormaterial beheizt. Die Erzeugung des heißen, durch den verdampferseitigen Teil der katalytischen Brennerschichten 42a, 42b hindurchgeleiteten Brenngasgemisches kann durch einen diesen Brennerschichten 42a, 42b vorgeschalteten adiabaten katalytischen Brenner erzeugt werden. In diesem Fall wird dem Brenngasstrom nach Austritt aus dem adiabaten katalytischen Brenner je nach Bedarf noch Brenngas, z.B. Methanol, zugegeben, um für die katalytische Verbrennung im reformerseitigen Teil der katalytischen Brennerschichten 42a, 42b noch genügend Brenngas zur katalytischen Verbrennung verfügbar zu haben und dadurch den Reformer 41a, 41b ausreichend beheizen zu können.

Alternativ zur gezeigten Führung des Brenngases durch die katalytischen Brennerschichten 42a, 42b im Gleichstrom zum Einsatzstoffstrom durch die Verdampfer/Reformer-Kombinationsschichten 44a, 44b ist selbstverständlich auch eine Gegenstromführung möglich. In jedem Fall können je nach Durchströmungsrichtung und je nach der Verteilung des Verbrennungskatalysatormaterials in den katalytischen Brennerschichten von dem Verdampfer und dem Reformer die eine Komponente vorwiegend mittels Heißgas und die andere Komponente vorwiegend durch katalytische Verbrennung oder alternativ dazu, bei gleichmäßiger Belegung der katalytischen Brennerschichten über ihre gesamte Durchströmungslänge hinweg mit dem Verbrennungskatalysatormaterial, beide Komponenten primär durch katalytische Verbrennungswärme beheizt werden. Als weitere Alternative ist eine Beheizung des Verdampfers und des Reformers ausschließlich mit Heißgas möglich. In diesem Fall sind die katalytischen Brennerschichten von Fig. 4 durch katalysatorfreie Brennerschichten ersetzt, denen eine Brennereinheit vorgeschaltet ist und die als Heißgasströmungsschichten fungieren und von dem durch diese Brennereinheit erzeugten Heißgas durchströmt werden.

Anhand der drei oben detaillierter erläuterten Ausführungsbeispiele wird deutlich, daß sich die erfindungsgemäße Dampfreformierungsanlage insbesondere aufgrund der charakteristischen modulartigen Zusammenfassung von Verdampfer, Reformer und diese beheizender katalytischer Brennereinheit sehr kompakt mit niedriger Wärmekapazität und geringem Gewicht bauen läßt. Die Anlage kann durch Variation sowohl des Aufbaus der einzelnen Moduleinheiten als auch der Art und Anzahl von Moduleinheiten zur Bildung des gesamten, kombinierten Verdampfer/Reformer/Brenner-Moduls sehr variabel an den jeweils geforderten Leistungsbedarf angepaßt werden. Der Wegfall von Verbindungsrohren und zweier Endplatten ergibt gegenüber einer getrennten Realisierung von beheizbarem Reformer einerseits und beheizbarem Verdampfer andererseits eine weitere Einsparung an Gewicht und Fertigungsaufwand. Durch die im Vergleich zur wirksamen Funktionsfläche niedrige Oberfläche sind die Wärmeverluste der einzelnen Moduleinheiten und damit des daraus gebildeten Moduls relativ gering. Durch die integrierte Bauform von Verdampfer, Reformer und katalytischem Brenner wird zudem die Anzahl erforderlicher Anschlüsse minimiert.

## Patentansprüche

1. Anlage zur Dampfreformierung eines Kohlenwasserstoff- oder Kohlenwasserstoffderivat-Einsatzstoffs mit
- einem Verdampfer (20a, 20b) zur Bereitung eines umzusetzenden Einsatzstoffdampfgemischs,
- einem Reformer (21) zur reformierenden Umsetzung des Einsatzstoffdampfgemischs und
- Brennermitteln (22a, 22b, 22c) zur Beheizung des Verdampfers und des Reformers,
**gekennzeichnet durch**
- mehrere, schichtförmig aufgebaute Moduleinheiten (17a, 17b) gleichen Aufbaus, die mit Wärmekontakt aneinandergekoppelt sind und jeweils aus mit Wärmekontakt aneinandergrenzenden Schichten des Verdampfers, des Reformers und katalytischen Brennermitteln bestehen, wobei zwischen je zwei Verdampfer- und/oder Reformerschichten eine katalytische Brennerschicht angeordnet ist und die katalytischen Brennerschichten innerhalb jeder Moduleinheit miteinander in serieller oder paralleler Fluidverbindung stehen und wobei die Einlässe für die Verdampferschichten und/oder für die katalytischen Brennerschichten der mehreren Moduleinheiten parallelgeschaltet sind.

2. Dampfreformierungsanlage nach Anspruch 1, weiter
**dadurch gekennzeichnet**, d a ß
wenigstens eine Moduleinheit eine oder mehrere parallel durchströmbare, mit einer jeweiligen Verdampferschicht in Wärmekontakt stehende erste katalytische Brennerschichten (27a, 27b, 27c) und eine oder mehrere parallel durchströmbare, mit einer jeweiligen Reformerschicht in Wärmekontakt stehende zweite katalytische Brennerschichten (27d, 27e, 27f) aufweist, die der oder den ersten katalytischen Brennerschichten seriell nachgeschaltet ist bzw. sind.

3. Dampfreformierungsanlage nach Anspruch 2, weiter
**gekennzeichnet durch**
eine zusätzliche Zudosierleitung (33) zur Zudosierung von zusätzlichem Brennstoff und/oder zusätzlichem Sauerstoff in den von der ersten zur zweiten katalytischen Brennerschichtgruppe geleiteten Stoffstrom.

4. Anlage zur Dampfreformierung eines Kohlenwasserstoff- oder Kohlenwasserstoffderivat-Einsatzstoffs mit
- einem Verdampfer (40a, 40b) zur Bereitung eines umzusetzenden Einsatzstoffdampfgemischs,
- einem Reformer (41a, 41b) zur reformierenden Umsetzung des Einsatzstoffdampfgemischs und
- Brennermitteln (42a, 42b) zur Beheizung des Verdampfers und des Reformers,
**gekennzeichnet durch**
- eine oder mehrere, schichtförmig aufgebaute Moduleinheiten (43), die aus einer alternierenden Folge jeweils einer Verdampfer/Reformer-Kombinationsschicht (44a, 44b) und einer daran mit Wärmekontakt angrenzenden katalytischen Brennerschicht (42a, 42b) bestehen, wobei ein eintrittsseitiger Teil einer jeden Verdampfer/Reformer-Kombinationsschicht einen Verdampferteil (40a, 40b) und ein austrittsseitiger Teil derselben einen Reformerteil (41a, 41b) bildet und die jeweilige katalytische Brennerschicht in ihrem an den jeweiligen Verdampfer (40a, 40b) angrenzenden Teil in einer anderen Katalysatormaterialdichte oder mit einem Katalysatormaterial mit anderer Aktivität als in ihrem an den jeweiligen Reformerteil (41a, 41b) angrenzenden Teil oder nur in einem dieser beiden Teile mit einem zugehörigen Katalysatormaterial belegt ist.

5. Dampfreformierungsanlage nach einem der Ansprüche 1 bis 4, weiter
**dadurch gekennzeichnet** , d a ß
wenigstens eine Moduleinheit (17a, 17b) mehrere parallel durchströmbare Verdampfer- und/oder Reformerschichten aufweist.

6. Dampfreformierungsanlage nach einem der Ansprüche 1 bis 5, weiter
**dadurch gekennzeichnet**, d a ß
wenigstens eine Moduleinheit mehrere parallel durchströmbare katalytische Brennerschichten (22a, 22b, 22c) aufweist.

## Claims

1. System for reforming the vapour of a hydrocarbon or hydrocarbon-derivative feedstock comprising
- an evaporator (20a, 20b) for preparing a feedstock vapour mixture to be converted,
- a reformer (21) for the reforming conversion of the feedstock vapour mixture and
- burner means (22a, 22b, 22c) for heating the evaporator and the reformer,
**characterized by**
- a plurality of layered module units (17a, 17b) of identical construction, which are interconnected with thermal contact and each comprise layers, which are mutually adjacent with thermal contact, of the evaporator, the reformer and catalytic burner means, wherein between each two evaporator and/or reformer layers a catalytic burner layer is disposed and the catalytic burner layers within each module unit are in serial or parallel fluid connection with one another and wherein the inlets for the evaporator layers and/or for the catalytic burner layers of the plurality of module units are connected in parallel.

2. Vapour reforming system according to claim 1, further
**characterized in that**
at least one module unit comprises one or more first catalytic burner layers (27a, 27b, 27c), which are capable of parallel throughflow and in thermal contact with a respective evaporator layer, and one or more second catalytic burner layers (27d, 27e, 27f), which is/are capable of parallel throughflow and in thermal contact with a respective reformer layer and which is/are series-connected downstream of the first catalytic burner layer or layers.

3. Vapour reforming system according to claim 2, further
**characterized by**
an additional charging line (33) for charging additional fuel and/or additional oxygen into the stock flow conveyed from the first to the second catalytic burner layer group.

4. System for reforming the vapour of a hydrocarbon or hydrocarbon-derivative feedstock comprising
- an evaporator (40a, 40b) for preparing a feedstock vapour mixture to be converted,
- a reformer (41a, 41b) for the reforming conversion of the feedstock vapour mixture and
- burner means (42a, 42b) for heating the evaporator and the reformer,
**characterized by**
- one or more layered module units (43), which comprise an alternating sequence of, in each case, an evaporator/reformer combination layer (44a, 44b) and a catalytic burner layer (42a, 42b) lying adjacent to the latter with thermal contact, wherein an inlet-side part of each evaporator/reformer combination layer forms an evaporator part (40a, 40b) and an outlet-side part of the same forms a reformer part (41a, 41b) and the respective catalytic burner layer in its part adjacent to the respective evaporator (40a, 40b) is coated with an associated catalyst material in a different catalyst material density or with a catalyst material of a different activity than in its part adjacent to the respective reformer part (41a, 41b) or only in one of said two parts.

5. Vapour reforming system according to one of claims 1 to 4, further
**characterized in that**
at least one module unit (17a, 17b) comprises a plurality of evaporator and/or reformer layers capable of parallel throughflow.

6. Vapour reforming system according to one of claims 1 to 5, further
**characterized in that**
at least one module unit comprises a plurality of catalytic burner layers (22a, 22b, 22c) capable of parallel throughflow.

## Revendications

1. Installation de reformage à la vapeur d'une substance de charge composée d'hydrocarbure ou composée à partir d'un dérivé d'hydrocarbure utilisant
- un vaporisateur (20a, 20b) pour la préparation, à partir de ladite substance de charge, d'un mélange de vapeur à transformer
- un reformeur (21) pour la transformation par reformage dudit mélange de vapeur et
- des moyens de brûlage (22a, 22b, 22c) pour le chauffage du vaporisateur et du reformeur,
**caractérisée par**
- plusieurs unités de modules (17a, 17b) disposées en couches et de conception identique, lesquelles sont reliées les unes aux autres avec contact thermique et sont constituées chacune de couches contiguës avec contact thermique de vaporisateur, de reformeur et de brûleur catalytique, une couche de brûleur catalytique étant disposée entre deux couches de vaporisateur et/ou de reformeur et les couches de brûleur catalytique à l'intérieur de chaque unité de modules étant les unes avec les autres en liaison de fluide en série ou en parallèle, et les admissions pour les couches de vaporisateur et/ou pour les couches de brûleur catalytique desdites unités de modules étant montées en parallèle.

2. Installation de reformage à la vapeur selon la revendication 1,
**caractérisée en ce que**
au moins une unité de modules présente une première ou plusieurs premières couches de brûleur catalytique (27a, 27b, 27c) permettant la circulation en parallèle d'un fluide et en contact thermique avec une couche de vaporisateur, et une deuxième ou plusieurs deuxièmes couches de brûleur catalytique (27d, 27e, 27f) permettant la circulation en parallèle d'un fluide et en contact thermique avec une couche de reformeur, laquelle ou lesquelles couches sont montées en série avec la ou les couches de brûleur catalytique.

3. Installation de reformage à la vapeur selon la revendication 2,
**caractérisée par**
une conduite supplémentaire (33) pour l'introduction par dosage de combustible supplémentaire et/ou d'oxygène supplémentaire dans le flux de matière dirigé depuis le premier vers le deuxième groupe de couches de brûleur catalytique.

4. Installation de reformage à la vapeur d'une substance de charge composée d'hydrocarbure ou composée à partir d'un dérivé d'hydrocarbure utilisant
- un vaporisateur (40a, 40b) pour la préparation, à partir de ladite substance de charge, d'un mélange de vapeur à transformer
- un reformeur (41a, 41b) pour la transformation par reformage dudit mélange de vapeur et
- des moyens de brûlage (42a, 42b) pour le chauffage du vaporisateur et du reformeur,
**caractérisée par**
- une ou plusieurs unités de modules (43) disposées en couches, lesquelles sont constituées, se succédant en alternance, d'une couche de combinaison vaporisateur/reformeur (44a, 44b) et d'une couche de brûleur catalytique (42a, 42b) contiguë en contact thermique avec cette dernière, une partie de chaque couche de combinaison vaporisateur/reformeur en entrée formant une partie de vaporisateur (40a, 40b) et une partie de ladite couche en sortie formant une partie de reformeur (41a, 41b), et la couche de brûleur catalytique étant garnie dans sa partie contiguë au vaporisateur (40a, 40b) d'un matériau catalyseur d'une autre densité ou d'un matériau catalyseur fonctionnant selon un autre mode d'activité que dans sa partie contiguë à la partie de reformeur (41a, 41b) ou étant garnie d'un matériau catalyseur dans seulement l'une de ces deux parties.

5. Installation de reformage à la vapeur selon l'une des revendications 1 à 4,
**caractérisée en ce que**
au moins une unité de modules (17a, 17b) présente plusieurs couches de vaporisateur et/ou de reformeur permettant la circulation en parallèle d'un fluide.

6. Installation de reformage à la vapeur selon l'une des revendications 1 à 5,
**caractérisée en ce que**
au moins une unité de modules présente plusieurs couches de brûleur catalytique (22a, 22b, 22c) permettant la circulation en parallèle d'un fluide.
